# EUROPÄISCHE PATENTSCHRIFT

(11) **EP 0 503 036 B1**
(45) Veröffentlichungstag und Bekanntmachung des Hinweises auf die Patenterteilung: **21.06.1995**
(21) Anmeldenummer: 91917293.2
(22) Anmeldetag: 27.09.1991
(51) Int. Cl.: G01S 17/58, G01R 23/10

(54) **OPTISCHES GERÄT ZUR MESSUNG DER GESCHWINDIGKEIT ODER LÄNGE EINER BEWEGTEN OBERFLÄCHE**
OPTICAL DEVICE FOR MEASURING THE SPEED OR LENGTH OF A MOVED SURFACE
APPAREIL OPTIQUE DE MESURE DE LA VITESSE OU DE LA LONGUEUR D'UNE SURFACE EN MOUVEMENT

(30) Priorität: 27.09.1990 DE 9013559 U
(43) Veröffentlichungstag der Anmeldung: 16.09.1992
(73) Patentinhaber: Mesacon Gesellschaft für Messtechnik mbH, D-44227 Dortmund (DE)
(72) Erfinder: KOPKA, Michael, D-4600 Dortmund 30 (DE)
(74) Vertreter: Patentanwälte Wenzel & Kalkoff
(86) Internationale Anmeldenummer: EP9101855
(87) Internationale Veröffentlichungsnummer: WO9206389

(56) Entgegenhaltungen:
- FR-A- 2 479 512
- GB-A- 2 221 591
- TECHNISCHES MESSEN ATM. Bd. 45, Nr. 2, Februar 1978, MUNCHEN DE Seiten 43 - 47;W. HÖSEL ET AL.: 'Eine genaue digitale Auswertmethode für Laser-Doppler-Velocimeter Signale' siehe Absatz 1.1 (iii) siehe Abbildung 1
- FUNKSCHAU. Bd. 27, Nr. 5, Februar 1987, MUNCHEN DE Seiten 59 - 62; W. HASCHER:'Gemessen und gezählt' siehe Absatz " Frequenzmessung mit dem Zähler " siehe Abbildung 2

## Beschreibung

### Optisches Gerät zur Messung der Geschwindigkeit oder Länge einer bewegten Oberfläche

Die Erfindung betrifft ein optisches Gerät zur Messung der Geschwindigkeit oder Länge einer bewegten Oberfläche, wobei ein von einem Laser ausgehender Meßlichtstrahl auf die Oberfläche gerichtet wird und das von der Oberfläche reflektierte doppler-verschobene Streulicht und anderweitiges Licht, beispielsweise nicht doppler-verschobenes Laserlicht oder ein anderes doppier-verschobenes Laserlicht, zur Erzielung einer Schwebung überlagert werden, deren Frequenz ein Maß für die Geschwindigkeit der Oberfläche bildet und in Form fortlaufend anfallender digitaler Signale in einem Auswertsystem aufgenommen und ausgewertet wird. Ein solches Gerät ist aus der Druckschrift GB-A-2 221 591 bekannt.

Bei der Entwicklung des Auswertsystems ist zu beachten, daß der durch das Meßverfahren gewonnenen Längeninformation eine Quantelung in der Größenordnung von 10 »m zugrundeliegt. Aufgrund der möglicherweise hohen Meßgutgeschwindigkeit und des verwendeten Frequenzoffsets können die Meßfrequenzen bis zu 10 MHz betragen. Für die Genauigkeit des Meßverfahrens ist es erforderlich, daß mit dem Auswertsystem sämtliche Längeninkremente erfaßt und ausgewertet werden.

Bei Anwendung bisher üblicher analoger Auswertsysteme mit sogenannten Tracking Filtern ergeben sich häufig Fehlmessungen, und zwar vor allem dann, wenn in dem Auswertsystem das Nutzsignal nicht eindeutig von den Rauschanteilen getrennt werden kann.

Bei einem weiteren bekannten Auswertsystem werden die Meßfrequenzen in einem Meßzyklus gemessen und in einem anschließenden Auswertezyklus durch Integration ausgewertet. Es wird hierbei zwar nur ein einzelner, schneller Zähler mit geringer Zähltiefe und ein nachgeschaltetes Addierwerk mit geringerer Geschwindigkeit eingesetzt, so daß der gerätetechnische Aufwand in einem angemessenen Rahmen bleibt, aber bei dieser Lösung kann nicht zeitgleich gezählt und addiert werden, so daß einzelne Längeninkremente nicht erfaßt werden, so daß durch die abwechselnden Meß- und Auswertezyklen Verfälschungen des Ergebnisses verursacht werden.

Bei einer maximalen Neßgutlänge von 100 km kann die Auswertung auch durch einen synchronen 35 Bit Vor-/Rückzähler mit einer maximalen Zählfrequenz von 10 MHz erfolgen. Aber diese Lösung würde einen erheblichen Hardwareaufwand erfordern.

Es besteht daher die Aufgabe, ein Auswertsystem zu schaffen, mit dem die Signale, nämlich die Meßfrequenzen, kontinuierlich ohne Informationsverlust aufgenommen und ausgewertet werden, ohne daß hierfür ein unverhältnismäßig hoher Aufwand erforderlich ist.

Diese Aufgabe wird erfindungsgemäß dadurch gelöst, daß bei einem optischen Gerät der eingangs genannten Art einem zur Erfassung der Schwebungssignale bestimmten Zähler mit hoher Zählgeschwindigkeit ein Zwischenspeicher nachgeschaltet ist, der mit einem Addierwerk zur taktweisen Übertragung des Zwischenspeicherinhalts verbunden ist, daß ein Steuerwerk zur Ablaufsteuerung mit dem Zähler, dem Zwischenspeicher und dem Addierwerk verbunden ist und daß dem Steuerwerk ein Taktgeber vorgeschaltet ist.

Der Hauptvorteil dieses erfindungsgemäßen Auswertsystems besteht darin, daß es die aus dem optischen System fortlaufend anfallenden Signale, nämlich die Meßfrequenzwerte, kontinuierlich aufnimmt und verarbeitet, so daß damit alle Längeninkremente bei beliebiger Meßgutgeschwindigkeit kontinuierlich gemessen werden und sich eine entsprechend hohe Meßgenauigkeit ergibt.

Für das zeitgleiche, schnelle Zählen der Signale ist ein entsprechend schneller Zähler vorgesehen, der jedoch eine geringe Zählkapazität haben kann und deshalb im Vergleich zum Stand der Technik nur geringen Aufwand erfordert.

Die Signale, die innerhalb einer vorgegebenen Abtastzeit von dem Zähler gezählt worden sind, werden nach Ablauf der Abtastzeit in den Speicher übernommen, der die Signale an das Addierwerk weitergibt, wo sie vorzeichenrichtig auf das vorhergehende Ergebnis addiert werden. Wesentlich ist, daß für diese Übernahme und Addition ein Zeitraum zur Verfügung steht, der maximal der Abtastzeit, also der Taktzeit, entspricht. Diese Zeit reicht aus, um diese Funktion durch einen programmgesteuerten Mikroprozessor ausführen zu lassen. Die Ablaufsteuerung, nämlich die Koordination des Zählers, des Zwischenspeichers und des Addierwerks, übernimmt das Steuerwerk, dem für die Steuerung der vorgenannten Komponenten eine Abtastzeit durch den vorgeschalteten Taktgeber vorgegeben wird.

Dieser Aufbau läßt die Verwendung verfügbarer, integrierter Zählbausteine und die Ausführung des Addiervorgangs in einem Mikroprozessorsystem zu. Dabei können praktisch beliebig große Zählwerke in verhältnismäßig langsamen Schaltungsteilen wie z.B. einem Mikroprozessor dargestellt werden. Schwankungen der Abtastzeit beeinflussen die Meßgenauigkeit im übrigen nicht, da keine Längeninkremente verlorengehen.

Nach einer erfindungsgemäßen Weiterentwicklung ist vorgesehen, daß der Eingang des Auswertsystems derart mit dem Steuerwerk gekoppelt ist, daß der Takt mit der Eingangsfrequenz synchronisiert wird. Dadurch werden metastabile Zustände mit der Eingangsfrequenz verhindert. Die Synchronisierung von Takt und Eingangsfrequenz beschränkt sich auf eine Anpassung der Signalflanken.

Die Erfindung wird nachstehend mit Bezug auf ein Ausführungsbeispiel näher erläutert.

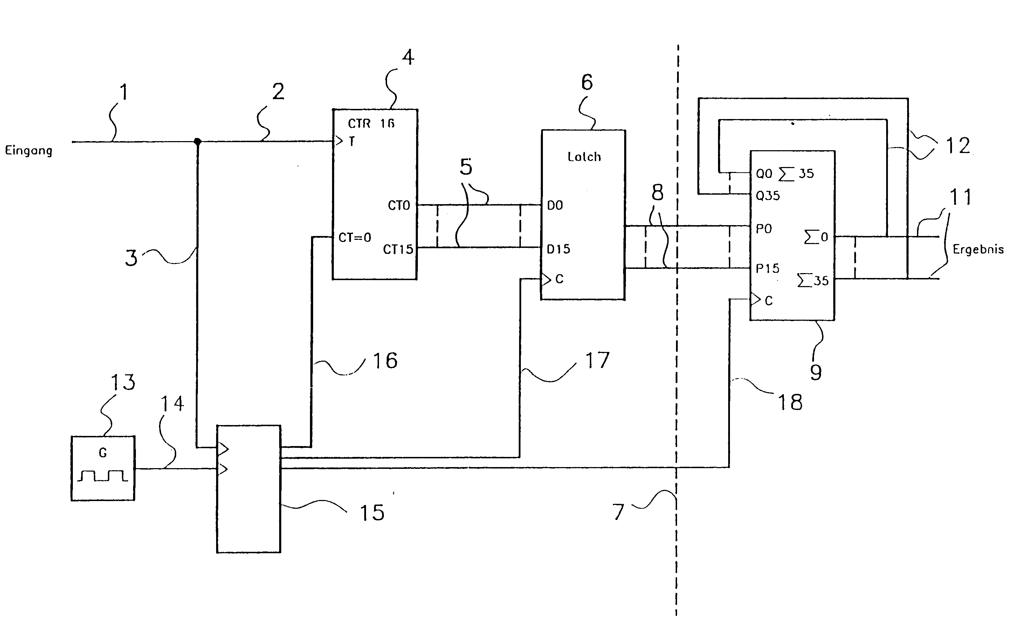

In der Zeichnung ist schematisch eine Schaltung eines Teil des Auswertsystems dargestellt, der das Zählen und Addieren der von dem optischen System fortlaufend abgegebenen Signale übernimmt.

Am Eingang des Auswertsystems, an dem die eingehenden Signale Fₑᵢₙ, nämlich die Meßfrequenzen, übernommen werden, verzweigt sich eine Eingangsleitung 1 in eine Leitung 2 und eine Leitung 3. Die Leitung 2 führt zu der Eingangsseite eines schnell aber mit geringer Zähltiefe arbeitenden Zählers 4, im vorliegenden Ausführungsbeispiel ein 16 Bit Zähler. An der Ausgangsseite sind die Zählstufen CT0 bis CT15 über Leitungen 5 mit Speicherstufen D0 bis D15 am Eingang eines Zwischenspeichers 6 verbunden. Über Leitungen 8 sind die Ausgänge des Zwischenspeichers 6 mit den Eingangsstufen P0 bis P15 eines Addierwerkes 9 verbunden. Die Trennlinie 7 soll anzeigen, daß der links dieser Linie gelegene Schaltungsteil als integrierte Schaltung und der hiervon rechts gelegene Teil durch einen programmgesteuerten Mikroprozessor ausführbar ist. Am Ausgang des Addierwerkes verlassen die Meßwerte diesen Teil des Auswertsystems als fortlaufend aufaddierte Längenangabe bis max. 2³⁶ x 10»m. Die Leitungen 12, die von der Ausgangsseite des Addierwerks 9 zu einem zweiten Eingang desselben zurückführen, sind ein Symbol für die kontinuierliche Addition der vom Zwischenspeicher 6 übernommenen Signale auf die vorhandenen Additionsergebnisse.

Im linken Teil der Schaltung ist als Taktgeber 13 ein Generator angeordnet, der den Arbeitstakt, nämlich eine Abtastzeit von im vorliegenden Fall 100»s für die Ablaufsteuerung erzeugt. Die vom Taktgeber 13 erzeugte Taktfrequenz von im vorliegenden Fall 10 KHz wird über eine Leitung 14 auf ein Steuerwerk 15 gegeben, das die Ablaufsteuerung übernimmt und hierfür über eine Leitung 16 mit dem Zähler 4, über eine Leitung 17 mit dem Zwischenzähler 6 und über eine Leitung 18 mit dem Zählwerk 9 verbunden ist.

Vom Eingang der Schaltung führt die Zweigleitung 2 zu dem Steuerwerk 15, so daß das Eingangssignal Fₑᵢₙ mit der Frequenz des Taktgebers 13 im Steuerwerk 15 synchronisiert werden kann.

Im Betrieb des optischen Gerätes werden die fortlaufend über den Eingang und die Leitungen 1 und 2 von der Schaltung aufgenommenen Eingangssignale Fₑᵢₙ, die Meßfrequenzen darstellen und im Bereich von 10 KHz bis 10 MHz liegen, kontinuierlich im Zähler 4 gezählt. Nach Ablauf der vom Taktgeber 13 vorgegebenen Abtastzeit wird mit einer Verzögerung von 1/(2Fₑᵢₙ) der Zählerstand in den Zwischenspeicher 6 übernommen und gleichzeitig der Zähler vier auf Null gesetzt. Die Rückstellung des Zählers 4 kann jedoch auch zu einem anderen Zeitpunkt, jedoch so rechtzeitig erfolgen, daß die verbleibende Zählkapazität für eine Abtastzeit ausreicht.

Anschließend wird der gespeicherte Wert aus dem Zwischenspeicher 6 über die Leitungen 8 in das Addierwerk 9 übernommen und dort vorzeichenrichtig auf das alte Ergebnis addiert. Für Übernahme und Addition steht ein Zeitraum von max. der Abtastzeit, die hier 100 »s beträgt, zur Verfügung. Diese Zeit reicht für das als programmgesteuerten Mikroprozessor ausgeführte Addierwerk 9 für dessen Funktion aus. Die Triggerung erfolgt durch Auslösen einer externen Programmunterbrechung.

Am Ausgang des Auswertsystems, nämlich über die Leitungen 11, steht damit im Takt der Abtastzeit von 100 »s die Gesamtzahl aller bis dahin aufgelaufenen Längeninkremente zur Verfügung.

Abschließend wird noch einmal hervorgehoben, daß mit diesem lediglich als Ausführungsbeispiel zu verstehenden Auswertsystem sämtliche Eingangssignale Fₑᵢₙ ohne Unterbrechung kontinuierlich aufgenommen und ausgewertet werden. Im Verhältnis zu der kontinuierlichen und ohne Arbeitsverlust erfolgenden Auswertung ist der Geräteaufwand relativ gering.

## Patentansprüche

1. Gerät zur Messung der Geschwindigkeit oder Länge einer bewegten Oberfläche, wobei ein von einem Laser ausgehender Meßlichtstrahl auf die Oberfläche gerichtet wird und das von der Oberfläche reflektierte doppler-verschobene Streulicht und anderweitiges Licht, beispielsweise nicht doppler-verschobenes Laserlicht oder ein anderes doppler-verschobenes Laserlicht, zur Erzielung einer Schwebung überlagert werden, deren Frequenz Fₑᵢₙ ein Maß für die Geschwindigkeit der Oberfläche bildet und in Form fortlaufend anfallender digitaler Signale in einem Auswertsystem aufgenommen und ausgewertet wird, dadurch **gekennzeichnet**, daß in dem Auswertsystem einem zur Erfassung der Schwebungssignale mit der Frequenz Fₑᵢₙ bestimmten Zähler (4) mit hoher Zählgeschwindigkeit ein Zwischenspeicher (6) nachgeschaltet ist, der mit einem Addierwerk (9) zur taktweisen Übertragung des Zwischenspeicherinhalts verbunden ist, daß ein Steuerwerk (15) zur Ablaufsteuerung mit dem Zähler (4), dem Zwischenspeicher (6) und dem Addierwerk (9) verbunden ist und daß dem Steuerwerk (15) ein Taktgeber (13) vorgeschaltet ist.

2. Optisches Gerät nach Anspruch 1, dadurch **gekennzeichnet**, daß der Eingang des Auswertsystems derart mit dem Steuerwerk (15) gekoppelt ist, daß der Takt mit der Frequenz der Signale Fein synchronisiert wird.

## Claims

1. Device for measuring the speed or length of a moved surface, where a measuring light beam from a laser is directed towards the surface and the Doppler-shifted dispersed light reflected from the surface and other light, for example laser light which is not Doppler-shifted or another Doppler-shifted laser light, are overlaid to produce a beat whereof the frequency Fᵢₙ forms a measure of the speed of the surface and is received and evaluated in an evaluation system in the form of continuously occurring digital signals, **characterized** in that in the evaluation system there is downstream of a counter (4) intended for detecting the beat signals with the frequency Fᵢₙ and having a high counting speed an intermediate store (6) which is connected to an adding mechanism (9) for pulsewise transmission of the intermediate store contents, in that a control mechanism (15) for sequence control is connected to the counter (4), the intermediate store (6) and the adding mechanism (9), and in that a pulse generator (13) is upstream of the control mechanism (15).

2. Optical device according to claim 1, **characterized** in that the inlet of the evaluation system is coupled to the control mechanism (15) such that the pulse is synchronized to the frequency of the signals Fᵢₙ.

## Revendications

1. Appareil optique pour la mesure de la vitesse ou de la longueur d'une surface en mouvement, un rayon lumineux de mesure émis par un laser étant dirigé sur la surface et la lumière diffusée déplacée par effet Doppler, réfléchie par la surface, et de l'autre lumière, par exemple de la lumière laser qui n'est pas déplacée par effet Doppler ou une autre lumière laser déplacée par effet Doppler étant superposées pour obtenir un battement dont la fréquence Fₑᵢₙ constitue une mesure pour la vitesse de la surface et est captée et exploitée dans un système d'exploitation sous forme de signaux numériques produits en continu, caractérisé en ce qu'une mémoire intermédiaire (6) est placée dans le système d'exploitation en aval d'un compteur (4) à vitesse de comptage élevée qui est destiné à enregistrer les signaux de battement de fréquence Fₑᵢₙ , mémoire intermédiaire qui est reliée à un organe addeur (9) pour la transmission cadencée du contenu de la mémoire intermédiaire, qu'un organe de commande (15) pour la commande du déroulement est relié au compteur (4), à la mémoire intermédiaire (6) et à l'organe addeur (9) et qu'un générateur d'impulsions (13) est placé en amont de l'organe de commande (15).

2. Appareil optique selon la revendication 1, caractérisé en ce que l'entrée du système d'exploitation est couplée à l'organe de commande (15) de telle manière que le cycle est synchronisé avec la fréquence des signaux Fₑᵢₙ.
